Europäisches Patentamt

European Patent Office

Office européen des brevets

(11) Publication number : **0 488 476 A2**

(12) **EUROPEAN PATENT APPLICATION**

(21) Application number : **91203107.7**

(22) Date of filing : **27.11.91**

(51) Int. Cl.⁵ : **H04B 1/50**

(30) Priority : **29.11.90 AU 3612/90**

(43) Date of publication of application :
**03.06.92 Bulletin 92/23**

(84) Designated Contracting States :
**DE ES FR GB IT SE**

(71) Applicant : **N.V. Philips' Gloeilampenfabrieken
Groenewoudseweg 1
NL-5621 BA Eindhoven (NL)**

(72) Inventor : **Van Kampen, Adrian Cornelis
Antonius
c/o INT. OCTROOIBUREAU B.V. Prof.
Holstlaan 6
NL-5656 AA Eindhoven (NL)**
Inventor : **Huth, Philip Arthur
c/o INT. OCTROOIBUREAU B.V. Prof.
Holstlaan 6
NL-5656 AA Eindhoven (NL)**

(74) Representative : **Bakker, Hendrik et al
INTERNATIONAAL OCTROOIBUREAU B.V.
Prof. Holstlaan 6
NL-5656 AA Eindhoven (NL)**

(54) **Radio transceiver.**

(57)    Radio transceiver having two angle modulators for the transmit signal and for the receive signal and two mixers in the receive path. In known radio transceivers it is conventional to supply local oscillations having a single frequency to the mixers. It is usual to provide additional componentry such as frequency synthesizers for generating these local oscillations. This adds to the costs and complexity of the radio tranceiver, and the additional componentry are sources of different frequency generation which may create spurious interferences. To solve these problems the radio tranceiver further comprises a second angle modulator for producing a local oscillator signal comprising a carrier wave of a second frequency, the radio transmission signal is applied to the first mixer and the local oscillator signal is applied to the second mixer, and a phase shifter being so arranged that the phase of the signal applied to the first angle modulator differs from the phase of the signal applied to the second angle modulator, the modulation characteristics of the angle modulators being so matched and the phase shifter having such a phase delay that substantial rejection is achieved in the second mixer of a modulation component related to the transmit message signal present in the receive path.

EP 0 488 476 A2

The present invention relates to a radio transceiver having a transmit path compising a first angle modulator for producing a radio transmission signal comprising a carrier wave of a first frequency modulated by a transmit message signal applied thereto, and having a receive path comprising a first and second mlxer for producing a resultant intermediate frequency signal from a radio reception signal applied thereto.

Radio transceivers of this type are well known in the art, a typical example of which is disclosed in UK Patent Application 2 223 146. In these radio transceivers it is conventional to supply respective local oscillations to the first and second mixers for the purposes of receiving the radio reception signal, each local oscillation being of the form of a continuous sinusoidal waveform having a single frequency. It is usual to provide additional componentry such as frequency synthesisers or local oscillators for geneating these local osclllations. This has the disadvantage that the additional componentry adds to the costs and complexity of the radio transceiver, and that the additional componentry are sources of different frequency generation which may create spurious interferences that can seriously affect the performance of the transceiver and/or of other equipment.

It is an object of the present invention to minimize these disadvantages and to this end the invention comprises a radio transceiver having a transmit path comprising a first angle modulatcr for producing a radio transmisslon signal comprising a carrier wave of a first frequency modulated by a transmit message signal applied thereto, and having a receive path comprising first and second mixers for producing a resultant intermediate frequency signal from a radio reception signal applied thereto, the transceiver further comprising a second angle modulator for producing a local oscillator signal comprising a carrier wave of a second frequency modulated by the transmit message signal applied thereto, the radio transmission signal being applied to a local oscillator input of the first mixer and the local oscillator signal being applied to a local oscillator input of the second mixer, and phase shift means being so arranged that the phase of the transmit message signal applied to the first angle modulator differs from the phase of the transmit message signal applied to the second angle modulator, the respective modulation characteristics of the first angle modulator and the second angle modulator being so matched and the phase shift means having such a phase delay that substantial rejection is achieved in the second mixer of a modulation component related to the transmit message signal present in the receive path.

In this way additional componentry for supplying a local oscillation to the first mixer may be dispensed with and an extra source of frequency generation will be eliminated as the radio transmission signal which is generated for the purposes of transmission is also fed to the local oscillator input of the first mixer in the receive path. As the supply of the radio transmission signal to the local oscillator input of the first mixer has the undesirable consequence of causing the transmit message signal to be present in the receive path of the transceiver there is provided a second angle modulator and phase shift means for supplying a local oscillation signal to the second mixer for the purposes of not only mixing but also for rejecting the transmit message signal which is present in the receive path.

In a preferred embodiment of the invention, the transmit message signal may be applied to the first angle modulator via the phase shift means and be applied directly to the second angle modulator. In an alternative embodiment the transmit message signal may be applied to the second angle modulator via the phase shift means and be applied directly to the first angle modulator.

In another preferred embodiment of the invention the radio reception signal may be applied to an input of the first mixer, an output of which is applied via a filter to a third mixer, an output of which is applied via a further filter to an input of the second mixer for producing at an output thereof said resultant intermediate frequency, wherein a local oscillator is applied to a local oscillator input of the third mixer.

In a further preferred embodiment of the invention the first angle modulator comprises a phase locked loop including a voltage controlled oscillato, a divider, a phase detector and a loop filter. Preferably the second angle modulator may be in the form of a voltage controlled crystal oscillator.

The invention will now be described with reference to the accompanying drawing in which:

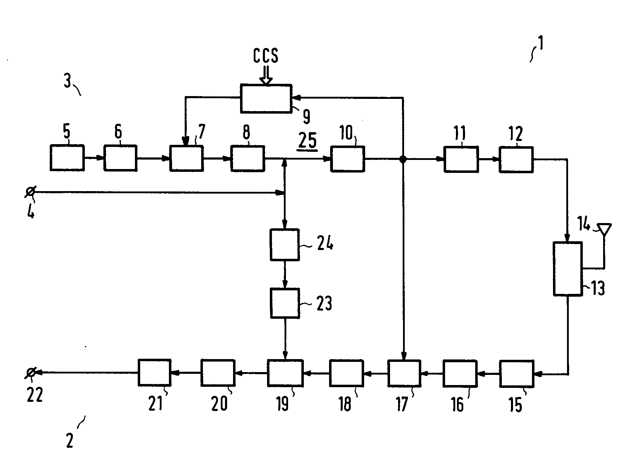

Figure 1 shows in block form a schematic representation of a radio transceiver in accordance with the invention.

In Figure 1, a radio transceiver 1 is shown which may be used in mobile radio communication systems, such as a cellular telephone system which includes a plurality of mobile stations and a plurality of base stations connected to a public telephone network. It is usual in such a system, for communication between a mobile station and a base station to take place on a radio frequency channel selected from a plurality of different radio frequency channels. On such a selected channel the mobile station and base station communicate by way of duplex operation so that the user can transmit and receive at the same time. This duplex operation requires two different carrier frequencies, one for transmitting and one for receiving. The system usually requires that the duplex spacing between the receiving and transmitting carrier frequencies to be the same for each channel. The transceiver shown in Figure 1 may be used as one of the mobile stations in such a radio system.

The transceiver 1 shown in Figure 1 has a transmit path 3 for transmitting a radio transmission signal on a selected channel. The transmit path 3 is provided with an input 4 for receiving a transmit message signal, which transmit message signal may be in the form of a wideband audio signal containing speech and/or digital data. The transmit path 3 of the transceiver 1 is provided with a frequency modulator 25 of a known type consisting of a phase lock loop which is denoted by referencec numerals 7,8,9,10. In the frequency modulator 25 the transmit message signal is supplied to a voltage controlled oscillator 10 together with an output signal from a loop filter 8. The voltage controlled oscillator 10 generates a radio transmission signal consisting of a carrier wave having a frequency $f_2$ which is modulated by the transmit message signal. The radio transmission signal generated by the voltage controlled oscillator 10 is supplied to a programmable divider 9 which divides the frequency and phase of the radio transmission signal by a divisor, the value of the divisor being set in response to a channel control signal CCS supplied to the divider 9. The divider 9 provides the divided signal to a phase detector 7 to which a reference signal is also provided from a reference oscillator 5 through a fixed divider 6. The phase detector 7 compares the phases of the two input signals to produce an output signal which is representative of the phase difference between the two input signals. The output signal of the phase detector 7 is supplied to the voltage controlled oscillator 10 via a loop filter 9, which filter 9 eliminates any unnecessary high frequency components. The output of the loop filter 9 and the transmit message signal are combined and applied to the voltage controlled oscillator 10 to control the output frequency thereof. The output of the voltage controlled oscillator 10, namely the radio transmission signal, is supplied through a buffer 11 to a power amplifier 12, the buffer 11 providing reverse isolation between the input and output thereof. The power amplifier 12 amplifies the radio transmission signal up to a desired level and supplies the amplified signal to the antenna 14 through the duplexer 13 for radiation.

In the receive path 2 of the transceiver 1, the antenna 14 receives the radio reception signals present on the channels including the radio reception signal on the selected channel. This radio reception signal on the selected channel consists of a carrier wave of frequency $f_1$ modulated by a receive message signal, where the duplex spacing between the radio transmission and radio reception signal on the selected channel is equal to $f_1 - f_2$. The antenna 14 supplies these radio reception signals to an RF amplifier 15 through the duplexer 13, which RF amplifier 15 amplifies the radio reception signals and supplies them to an RF bandpass filter 16 which eliminates any undesirable radio signals which lie outside the bandwidth occupied by the radio reception signals. The output of the bandpass filter 16 is supplied to one input of a first mixer 17. The first mixer 17 receives at its other input (the local oscillator input) the radio transmission signal simultaneously being transmitted from the output of the voltage controlled oscillator 10. The radio transmission signal supplied to the first mixer 17 may alternatively be taken from the output of the buffer 11 or from the radio amplifier 12. As described before this radio transmission signal consists of a carrier wave of frequency $f_1$ modulated by the transmit message signal. The first mixer 17 supplies at its output a first intermediate signal which includes amongst others a signal component $S_x$ consisting of a carrier wave of frequency $f_1 - f_2$ modulated by the sum of the receive message signal and the transmit message signal, where the frequency $f_1 - f_2$ is equivalent to the duplex spacing. The first mixer 17 supplies this first intermediate signal to a second mixer 19 via a bandpass filter 18 having a centre frequency equivalent to the duplex spacing, where the bandpass filter 18 eliminates as far as is possible from the first intermediate signal any signal components other than the abovementioned signal component $S_x$. The bandpass filter 18 supplies the first intermediate signal to one input of a second mixer 19 which receives at another input (the local oscillator input) a local oscillation signal. The second mixer 19 mixes the two applied signals to produce a second intermediate frequency signal which is applied to a frequency demodulator 21 through an intermediate frequency limiter 20, the latter limiting the amplitude of the second intermediate signal to a certain level. The frequency demodulator 21 demodulates the second intermediate signal to produce a receive message signal which is supplied to the receiver output 22. The receive message signal may be in the form of a wideband audio signal consisting of speech and/or data.

The first intermediate frequency signal fed to the second mixer 19 contains a modulation component related to the transmit message signal and unless corrective measures are taken the transmit message signal will be present at the output of the receive path. This problem is overcome by supplying a local oscillation signal to the local oscillator input of the second mixer 19 for purposes of not only mixing but also rejecting the modulation component of the first intermediate signal related to the transmit message signal. This local oscillation signal is derived by supplying the transmit message signal to a frequency modulator 23 through a phase shifting network 24. The frequency modulator 23, which may be in the form of a voltage controlled crystal oscillator, produces the local oscillation signal consisting of a carrier wave of frequency $f_3$ which is frequency modulated by the phase shifted transmit message signal.

Ideally the phase shifting network should introduce a phase delay of 180° in the transmit message signal and the modulation characteristics of the frequency modulator 23 should be matched to the modulation characteristics of the frequency modulator 25, in order that the modulation component related to the transmit message signal of the local oscillator signal and the modulation component related to the transmit message signal of the intermediate signal fed to the second mixer 19 are of equal magnitude and are in anti-phase, so that cancellation (i.e. complete rejection) of the modulation component will occur during mixing in the second mixer 19. Thus ideally the second intermediate frequency signal consists of a carrier wave of a frequency $f_1 - f_2 = f_3$ modulated by the receive message signal. However, in practice cancellation of the modulation component related to the transmit message signal is difficult if not impossible to achieve. In one practical application of the transceiver shown in Figure 1 it has been found that the optimum phase shift for maximum rejection was not 180° over the frequency range of the transmit message signal and the amount of rejection varied with the frequency of the transmit message signal. This is probably due to phase delays being introduced in other parts of the circuitry of the transceiver, for example In the phase locked loop 7, 8, 9 and 10 of the transmit path 3. Preferably the phase shift should be optimized to achieve the maximum possible rejection. Furthermore complete matching of the frequency modulators 23 and 25 was not achievable in practice as their substantially different carrier wave frequencies required the frequency modulators 23 and 25 to have substantially different circuitry. Preferably there should be an optimum matching between the modulation characteristics of the frequency modulators 23 and 25 to achieve the maximum possible rejection. By optimizing the phase shift and the matching it was possible to achieve rejection of the modulation component related to the transmit message signal of the order of 37dB at 10 kHz through to 10dB at 0.3 kHz.

In transceivers it is preferable that there be some transmit message signal present in the receive path so that the user will receive some feedback from his own voice. In known transceivers this is achieved by means of separate sidetone circuitry. In the present invention where there is less than complete rejection of the modulation component related to the message transmit signal, this sidetone circuitry may be dispensed with.

The transceiver 1 is provided with a channel controller (not shown) whereby the transceiver 1 may transmit a radio transmission signal and receive a radio reception signal on any one channel selected from a number of different channels. In order to transmit a radio transmission signal on a different selected channel, the channel controller supplies a channel control signal CCS corresponding to the new selected channel to the divider 9 which changes the value of the divisor in response thereto, which in turn will change the carrier wave frequency $f_2$ of the radio transmission signal to be transmitted by a fixed amount. This radio transmission signal having the changed carrier wave frequency is fed to the local oscillator input of the first mixer 17 in the receive path 2. As a consequence the intermediate frequency signal at the output of the bandpass filter 18 will correspond to the radio reception signal on the new selected channel, where the carrier wave frequency of the radio reception signal is changed by the same amount. In another embodiment of the invention the transceiver may consist of a single channel transceiver and as such the channel controller may be dispensed with.

In a further embodiment of the invention not shown, the transceiver is similar in configuration and operation to the transceiver shown in Figure 1 except that the transmit message signal supplied to the input 4 is applied to the voltage controlled oscIllator 10 via the phase shift network 24 and is applied directly to the voltage controlled crystal oscillator 23. In this way a phase difference is produced between the transmit message signals applied to the frequency modulators 25 and 23, similar to that produced in the transceiver shown in Figure 1.

In a still further embodiment of the invention an additional mixer and bandpass filter may be provided intermediate the bandpass filter 18 and the second mIxer 19 of the transceiver 1 shown in Figure 1, the output of the bandpass filter 18 being supplied through the additional mixer to the additional bandpass filter. The output of the additional bandpass filter being supplied to the second mixer 19. There is further provided a local oscillator for supplying a local oscillation of a single frequency to the additional mixer. In this way the radio reception signai is frequency converted in three stages.

It will be appreciated that the invention is not limited to the embodiments described herein, but many further variations are possible for those skilled in the art without departing from the scope of the inventlon. For instance the invention may also be applied to PM, PSK, FSK and other angle modulator transceivers.

**Claims**

1. A radio transceiver having a transmit path comprising a first angle modulator for producing a radio transmission signal comprising a carrier wave of a first frequency modulated by a transmit message signal applied thereto, and having a receive path comprising first and second mixers for producing a resultant intermediate frequency signal from a radio reception signal applied thereto, the transceiver further comprising a second angle modulator for producing a local oscillator signal comprising a carrier wave of a second frequency modulated by the transmit message signal applied thereto, the radio transmission signal being applied to a local oscillator input of the first mixer and the local oscillator signal being applied to a local oscillator input of the second mixer, and phase shift means being so arranged that the phase of the transmit message signal applied to the first angle modulator differs from the phase of the transmit message signal applied to the second angle modulator, the respective modulation characteristics of the first angle modulator and the second angle modulator being so matched and the phase shift means having such a phase delay that substantial rejection is achieved in the second mixer of a modulation component related to the transmit message signal present in the receive path.

2. A radio transceiver according to Claim 1, in which the transmit message signal may be applied to the first angle modulator via the phase shift means and be applied directly to the second angle modulator.

3. A radio transceiver according to Claim 1, in which the transmit message signal may be applied to the second angle modulator via the phase shift means and be applied directly to the first angle modulator.

4. A radio transceiver according to Claim 1, in which the radio reception signal may be applied to an input of the first mixer, an output of which is applied via a filter to a third mixer, an output of which is applied via a further filter to an input of the second mixer for producing at an output thereof said resultant intermediate frequency, wherein a local oscillation is applied to a local oscillator input of the third mixer.

5. A radio transceiver according to Claim 1, in which the first angle modulator comprises a phase locked loop including a voltage controlled oscillator, a divider, a phase detector and a loop filter.

6. A radio transceiver according to Claim 1, in which the second angle modulator may be in the form of a voltage controlled crystal oscillator.